# EUROPEAN PATENT APPLICATION

(11) **EP 1 884 820 A2**
(43) Date of publication of application: **06.02.2008**
(21) Application number: 07113681.6
(22) Date of filing: 02.08.2007
(51) Int. Cl.: G02F 1/01

(54) **Control system and control method for controlling optical modulator**

(30) Priority: 02.08.2006 JP 2006211184
(71) Applicant: NEC CORPORATION, Tokyo (JP)
(72) Inventor: Doi, Kenji, Tokyo (JP)
(74) Representative: Betten & Resch

(57) **Abstract**

A control system for controlling an optical modulator that intensity-modulates input light, the system includes an automatic bias control circuit configured to control an operating point of an optical modulator due to a bias voltage, including (i) a low-frequency signal superimposing unit configured to superimpose a low-frequency signal having a frequency lower than the frequency of a data signal on the data signal; (ii) a photoelectric converter configured to convert an optical signal intensity-modulated with an optical modulator into a voltage signal based on the data signal on which the low-frequency signal is superimposed; (iii) an error voltage detector configured to detect an error voltage corresponding to the low-frequency signal superimposed on the data signal from the voltage signal; and (iv) a bias controller configured to control a bias voltage for applying to the optical modulator based on the error voltage, and an automatic bias control stabilizing circuit configured to stabilize the automatic bias control circuit to control the operating point of the optical modulator based on a direct current voltage extracted from the voltage signal.

## Description

### BACKGROUND OF THE INVENTION

### 1. Field of the Invention

The present invention relates to a control system and a control method for controlling an optical modulator. More particularly, the present invention relates to such a control system and a control method for controlling a Mach-Zehnder interferometer type optical modulator.

### 2. Description of the Related Art

Mach-Zehnder interferometer type LiNbO₃ (lithium niobate) optical modulators are often used as an external modulator in an optical transmitter, particularly in an optical transmitter for WDM (Wavelength Division Multiplex) since they have no wavelength dependency. However, a LiNbO₃ optical modulator shifts the modulation characteristic in the direction of the voltage axis due to temperature variation, application of DC voltage, or deterioration with time. That is called DC drift. When the modulation characteristic shifts, the optimum operating point varies. Therefore, not only is transmitted light distorted but also the extinction ratio of transmitted light is reduced. To cope with these problems, automatic bias control (ABC) to control bias voltage is required for the LiNbO₃ optical modulator so that the operating point of the modulator may be optimized.

Various ABC methods have been proposed. Among those methods, a method of superimposing a low-frequency signal having a frequency that is sufficiently low in comparison with the transmission speed of a data signal on the data signal is disclosed in reference document 1 (Japanese Patent Application Laid-Open Publication No. Hei 5-323245).

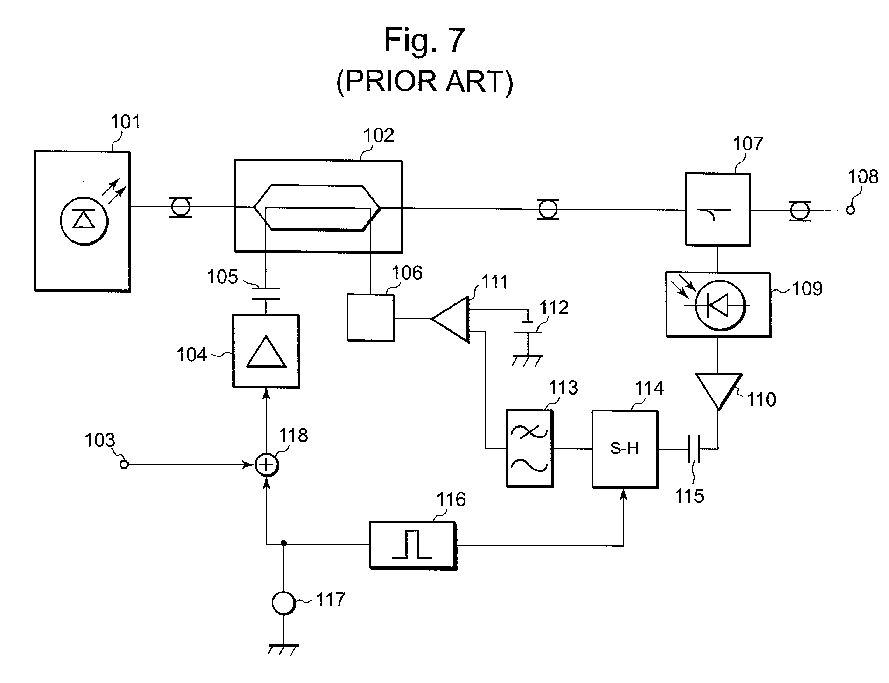

Fig. 7 shows a conventional ABC method disclosed in the reference document 1. In the conventional ABC method, an oscillator 117 generates a low-frequency signal having a frequency that is sufficiently low in comparison with the transmission speed of a data signal. A superimposing circuit 118 superimposes the low-frequency signal on the input data signal. The superimposed data signal is input to a LiNbO₃ Mach-Zehnder interferometer type modulator (hereinafter called LN-MOD) 102 via a modulator driving circuit 104 and a condenser 105. The input data signal is used for optical intensity-modulation at the LN-MOD 102 of the light provided by laser diode 101. The modulated optical signal is branched by an optical coupler 107, with one branch output from an output terminal 108, and the other received by a photodiode 109.

As for the received optical signal, the low-frequency signal superimposed on the data signal is then taken out of a waveform of the received optical signal with a current-voltage converter 110 and a condenser 115. The extracted low-frequency signal is input to a sample-and-hold circuit 114. The sample-and-hold circuit 114 samples and holds a waveform of the low-frequency signal based on a pulse signal synchronized with a low-frequency signal input from a pulse-generating circuit 116. Using the waveform, the sample-and-hold circuit 114 detects the direction and the magnitude of DC drift in the LN-MOD 102.

Based on the detected result, an operational amplifier 111 generates an error voltage for the reference voltage. A bias-supply circuit 106 controls an operating point of the LN-MOD 102 by controlling a bias voltage based on the error voltage. Therefore, this conventional controlling method aims to keep an operating point of the LN-MOD 102 at an optimum by providing a bias voltage to the LN-MOD 102 with feedback thereof.

In this conventional method, when the amount of the DC drift is identical, an optical signal modulated with the LN-MOD 102 contains a low-frequency signal component having amplitude corresponding to the amount of the DC drift according to the intensity of the optical signal. The magnitude of the DC drift detected with the sample-and-hold circuit 114 depends on the magnitude of the amplitude of the low-frequency signal component input to the sample-and-hold circuit 114.

However, the extracted magnitude of the amplitude of the low-frequency signal component varies in the following cases. For example, when the power of light emitted from a laser diode 101 is variable, when the power of light output from the LN-MOD 102 varies due to loss fluctuations of the LN-MOD 102 or a tracking error of the laser diode 101, and/or when the quantum efficiency of the photodiode 109 varies, a detected magnitude of the DC drift varies, and thereby a generated error voltage varies. As a result, the bias control for the LN-MOD 102 is not stable. It should be noted that variations in the quantum efficiency of the photodiode may be caused by individual element characteristics, as well as characteristic fluctuations when mounting.

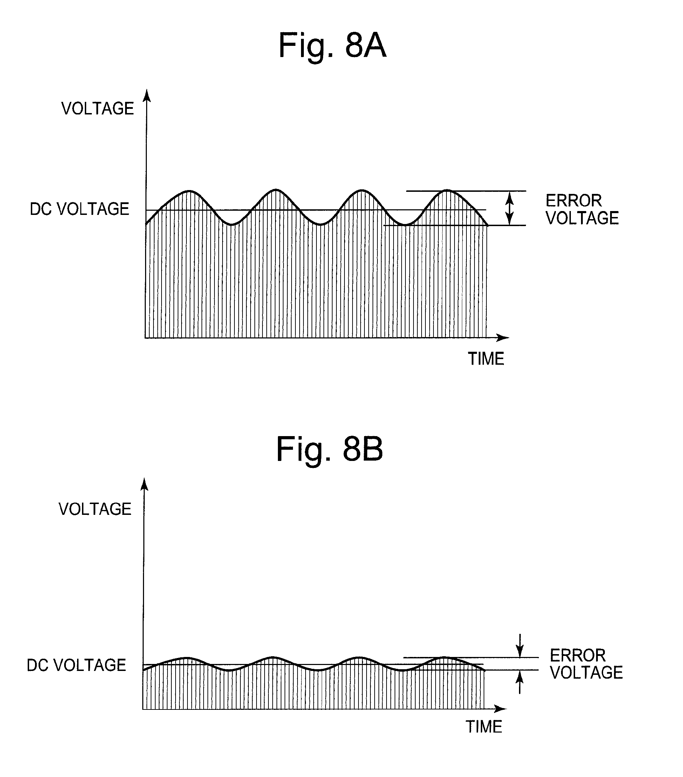

In greater detail, in the case where the intensity of light received with the photodiode 109 differs, when the DC drift having the same magnitude occurs, the ratio of the amplitude of the low-frequency signal component to the superimposed optical signal is constant, but the absolute value of the amplitude is not constant. As exemplified in Fig. 8A, as the intensity of light received with the photodiode 109 increases, the absolute value of the amplitude of the low-frequency signal component increases. Therefore, the feedback amount to the bias voltage applied to the LN-MOD 102 also increases. That is, the loop control amount in the ABC system increases, and thereby the ABC system may oscillate and deterioration of the waveform may occur in some cases.

In contrast to this, as shown in Fig. 8B, in the case where the intensity of light received with the photodiode 109 decreases, when the amount of the DC drift is identical, the ratio of amplitude of the low-frequency signal component to the superimposed optical signal is constant, but the absolute value of the amplitude decreases. Therefore, the feedback amount to the bias voltage applied to the LN-MOD 102 also decreases. That is, the loop control amount in the ABC system decreases, and thereby the pull-in time to optimum operation bias becomes longer than a prescribed time. Such variation of the amount of the received light in the photodiode 109 frequently occurs in practice, for example when the power of light emitted from the laser diode 101 varies or when the power of light output from the LN-MOD 102 varies due to loss fluctuations of the LN-MOD 102 or a tracking error of the laser diode 101.

The same explanation can be applied also to the case where the quantum efficiency of photoelectric conversion in the photodiode 109 varies. The quantum efficiency of a photodiode may vary in the range of not less than one digit. Hence, adjustment is required during production in order to achieve a stable ABC system.

### SUMMARY OF THE INVENTION

In view of the foregoing drawbacks of the related art methods and structures, the present invention seeks to provide a control system and a control method for carrying out a more stable automatic bias control by keeping the feedback bias voltage applied to an optical modulator constant, even when the intensity of an optical signal output from the optical modulator varies or when the quantum efficiency of a light receiving element varies.

A control system for controlling an optical modulator that intensity-modulates input light according to the present invention, the system includes an automatic bias control circuit configured to control an operating point of an optical modulator due to a bias voltage, including (i) a low-frequency signal superimposing unit configured to superimpose a low-frequency signal having a frequency lower than the frequency of a data signal on the data signal; (ii) a photoelectric converter configured to convert an optical signal intensity-modulated with an optical modulator into a voltage signal based on the data signal on which the low-frequency signal is superimposed; (iii) an error voltage detector configured to detect an error voltage corresponding to the low-frequency signal superimposed on the data signal from the voltage signal; and (iv) a bias controller configured to control a bias voltage for applying to the optical modulator based on the error voltage, and an automatic bias control stabilizing circuit configured to stabilize the automatic bias control circuit to control the operating point of the optical modulator based on a direct current voltage extracted from the voltage signal.

An optical modulator for intensity-modulating input light according to the present invention is configured to intensity-modulate input light and output an optical signal intensity-modulated by controlling by the control system mentioned above.

An optical transmitter for transmitting an optical signal according to the present invention, the optical transmitter includes a light emitting element configured to emit continuous-wave light, an optical modulator configured to intensity-modulate the continuous- wave light and output an optical signal intensity-modulated, and the control system configured to control the optical modulator mentioned above.

A method of controlling an optical modulator that intensity-modulates input light according to the present invention, the method includes superimposing a low-frequency signal having a frequency lower than the frequency of a data signal on the data signal; converting an optical signal intensity-modulated with an optical modulator into a voltage signal based on the data signal on which the low-frequency signal is superimposed; detecting an error voltage corresponding to the low-frequency signal superimposed on the data signal from the voltage signal; controlling a bias voltage for applying to the optical modulator based on the error voltage; controlling an operating point of the optical modulator due to the bias voltage; extracting a direct current voltage contained in the voltage signal; and stabilizing the control of the operating point of the optical modulator by the bias voltage based on the direct current voltage.

A method of modulating light according to the present invention includes controlling an optical modulator using the method mentioned above, and intensity-modulating light input to the optical modulator.

A method of transmitting an optical signal according to the present invention includes emitting continuous-wave light, controlling an optical modulator using the method mentioned above, intensity-modulating the continuous-wave light with the optical modulator, and transmitting an optical signal intensity-modulated.

Accordingly, with the configuration and method as described above, the control system and the control method for controlling an optical modulator according to the present invention produce an effect to make it possible to carry out a more stable automatic bias control by keeping the feedback bias voltage applied to an optical modulator constant, even when the intensity of an optical signal output from the optical modulator varies or when the quantum efficiency of a light receiving element varies.

### BRIEF DESCRIPTION OF THE DRAWINGS

Various aspects, features and advantages of the present invention will become more apparent from the following detailed description of preferred embodiments when taken in conjunction with the accompanying drawings wherein:
Fig. 1 is a block diagram showing an optical transmission system according to a first embodiment of the present invention;
Fig. 2 is a flowchart showing operations of an automatic bias control in the optical transmission system shown in Fig. 1;
Fig. 3 is a block diagram showing an optical transmission system according to a second embodiment of the present invention;
Fig. 4 is a flowchart showing operations of an automatic bias control in the optical transmission system shown in Fig. 3;
Fig. 5 is a block diagram showing an optical transmission system according to a third embodiment of the present invention;
Fig. 6 is a flowchart showing operations of an automatic bias control in the optical transmission system shown in Fig. 5;
Fig. 7 is a block diagram showing an optical transmission system using a conventional automatic bias control system;
Fig. 8A is an illustration showing a waveform example of the conventional optical transmission system; and
Fig. 8B is an illustration showing another waveform example of the conventional optical transmission system.

### DETAILED DESCRIPTION OF PREFERRED EMBODIMENTS

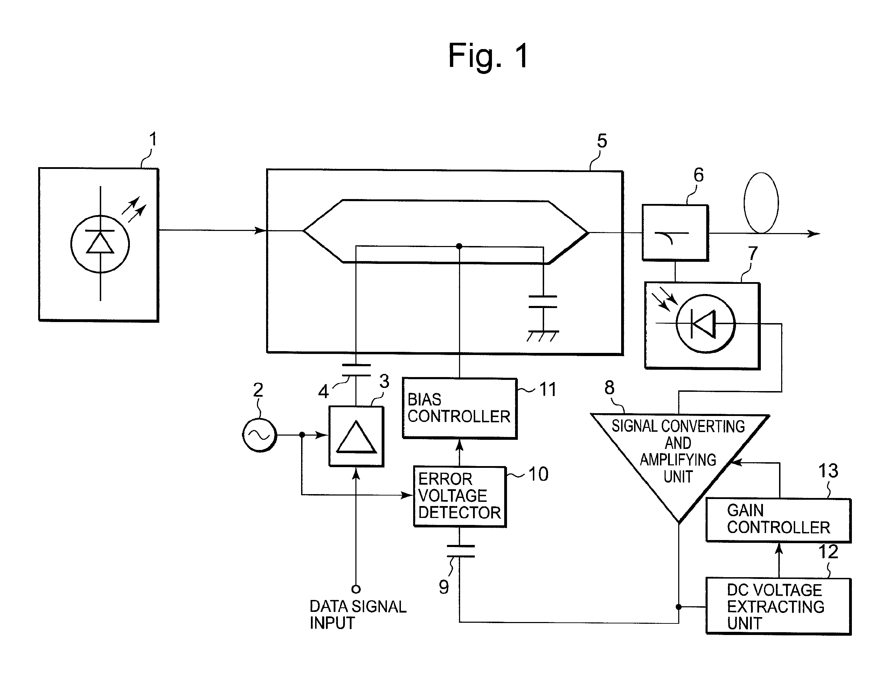

An optical transmission system according to a first embodiment of the present invention includes a laser module 1 that emits continuous-wave (CW) light as a light source and an external modulating unit that externally modulates the CW light emitted from the laser module 1, as shown in Fig. 1. The external modulating unit includes an optical modulator 5 that externally modulates the CW light and a control system that controls the optical modulator 5. The control system includes a low-frequency signal oscillator 2, an optical modulator driver 3, a condenser 4, an optical coupler 6, a photodiode 7, a signal converting and amplifying unit 8, a condenser 9, an error voltage detector 10, and a bias controller 11. These components form an automatic bias control (ABC) circuit in the control system. The control system according to the first embodiment further includes a direct current (DC) voltage extracting unit 12 and a gain controller 13. The DC voltage extracting unit 12 and the gain controller 13 form an automatic bias control (ABC) stabilizing circuit that stabilizes the ABC circuit. It should be noted that an optical fiber or a lens system optically connects the laser module 1 to the optical modulator 5, and the optical modulator 5 to the photodiode 7 via the optical coupler 6.

The laser module 1 emits continuous-wave (CW) light. The low-frequency signal oscillator 2 outputs a low-frequency signal having a frequency lower than the frequency of a data signal input from outside. The optical modulator driver 3 superimposes the low-frequency signal from the low-frequency signal oscillator 2 on the data signal. The optical modulator 5 may be a Mach-Zehnder interferometer type LiNbO₃ (lithium niobate) optical modulator. The optical modulator 5 intensity- modulates light input from the laser module 1 in response to the data signal on which the low-frequency signal is superimposed, and thereby outputs an optical signal. In addition, the optical modulator 5 has an operating point determined by the application of a bias voltage.

The optical coupler 6 divides the optical signal output from the optical modulator 5. The photodiode 7 receives the optical signal divided by the optical coupler 6 and converts the optical signal into a current signal (monitor current). The signal converting and amplifying unit 8 converts the current signal output from the photodiode 7 into a voltage signal and amplifies the voltage signal. The photodiode 7 and the signal converting and amplifying unit 8 function as a photoelectric converter to convert the optical signal output from the optical modulator 5 into a voltage signal.

The error voltage detector 10 samples the voltage signal output from the signal converting and amplifying unit 8 based on a pulse signal synchronized to a low-frequency signal input from the low-frequency signal oscillator 2 and holds the sampled voltage signal. Therefore, the error voltage detector 10 detects an error voltage, also called an error signal, in contrast to a reference voltage. The error voltage corresponds to the low-frequency signal component superimposed on the data signal. As a result, the error voltage detector 10 detects a direction and a magnitude of the DC drift in the optical modulator 5.

The bias controller 11 controls a bias voltage on the basis of the error voltage and applies the bias voltage to the optical modulator 5. Therefore, the bias controller 11 decreases a drift of an operating point of the optical modulator 5. The DC voltage extracting unit 12 extracts a DC component of the voltage signal output from the signal converting and amplifying unit 8. The gain controller 13 controls a gain of the signal converting and amplifying unit 8 so that the DC voltage value extracted with the DC voltage extracting unit 12 becomes constant. The DC voltage value may be controlled to become a target value.

In the first embodiment, the photodiode 7 receives branch light output from the optical coupler 6. However, a photodiode may be built into the optical modulator 5. In that case, the photodiode may directly receive light radiated from the output side of the optical modulator 5.

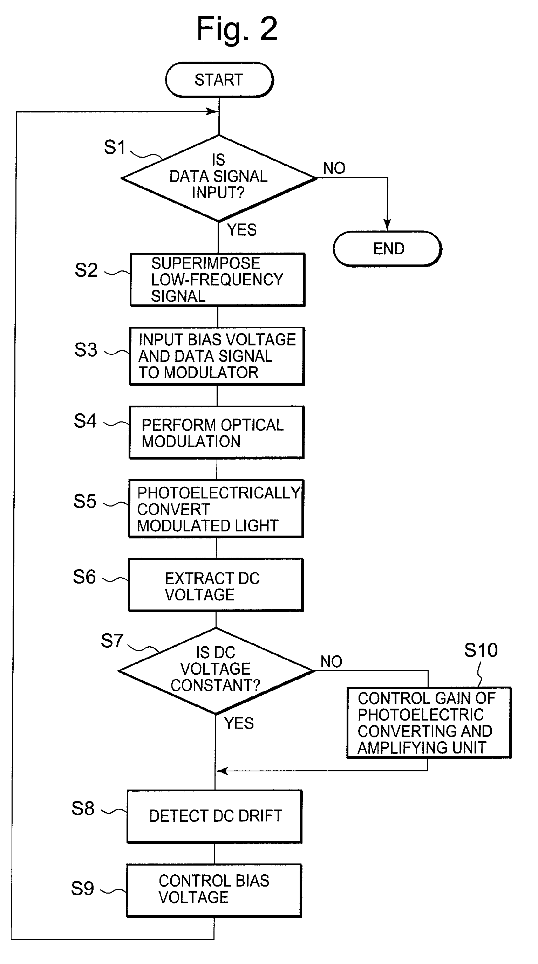

The operation of the first embodiment will now be described. In Fig. 2, first, a data signal is input (step S1). A low-frequency signal coming from the low-frequency signal oscillator 2 is superimposed on the data signal at the optical modulator driver 3 (step S2). A bias voltage, in order to set an operating point of the optical modulator 5, applied by the bias controller 11 and the data signal on which the low-frequency signal is superimposed by the optical modulator driver 3 are input to the optical modulator 5 via the condenser 4 (step S3). CW light emitted from the laser module 1 is intensity-modulated at the optical modulator 5 and output as an optical signal via the optical coupler 6 (step S4).

The optical signal divided by the optical coupler 6 is received and converted into a current signal (monitor current) with the photodiode 7, and is further converted into a voltage signal and amplified with the signal converting and amplifying unit 8 (step S5). A DC voltage is extracted from the amplified voltage signal with the DC voltage extracting unit 12 (step S6). The gain controller 13 determines whether the extracted DC voltage is a constant value (step S7). If the extracted DC voltage value is not a constant value, the gain controller 13 controls a gain of the signal converting and amplifying unit 8 so that the DC voltage may take a constant value (step S10). That is, the gain is decreased when the DC voltage is larger than a target value and the gain is increased when the DC voltage is smaller than the target value. The change in the gain of the signal converting and amplifying unit 8 may be carried out either by changing the gain of the current-voltage conversion or changing the gain of the amplification after the conversion.

Next, when the extracted DC voltage is a constant value in the step S7, or when the extracted DC voltage is controlled in order to take the target value in the step S10, the voltage signal output from the signal converting and amplifying unit 8 is input to the error voltage detector 10 via the condenser 9. The error voltage detector 10 samples the input voltage signal based on a pulse signal synchronized to a low-frequency signal input from the low-frequency signal oscillator 2, and holds the sampled voltage signal. Therefore, the error voltage detector 10 detects an error voltage, also called as an error signal, in contrast to a reference voltage. The error voltage corresponds to the low-frequency signal component superimposed on the data signal. As a result, the error voltage detector 10 detects a direction and a magnitude of the DC drift in the optical modulator 5 (step S8).

A bias voltage is controlled on the basis of the error voltage at the bias controller 11 (step S9). Hence, the amplitude of the low-frequency signal component input to the error voltage detector 10 is controlled to become constant as long as the DC drift amount is constant. Consequently, the amount of a loop control in the ABC system is kept constant. As a result, the operating point of the optical modulator 5 can be controlled optimally.

It should be noted that the contents of a series of operation mentioned above may be programmed and processed with a computer.

A benefit of the first embodiment will now be described. With the configuration and the operation mentioned above, the DC voltage value of the voltage signal converted from the optical signal is controlled to become constant, even in the case where the intensity of the optical signal received with the photodiode 7 varies. Therefore, the size of the amplitude of the low-frequency signal component becomes constant as long as the DC drift amount is constant. Consequently, the error voltage detector 10 can detect the DC drift amount precisely. The bias controller 11 applies a bias voltage corresponding to the DC drift amount detected precisely to the optical modulator 5. As a result, the first embodiment has an effect that a stable automatic bias control (ABC) can be carried out by keeping the feedback amount in the ABC system constant.

More specifically, in the ABC system, the first embodiment has an effect that a stable ABC can be realized without the following things, for example, the loop control amount decreases and thereby the pull-in time to optimum operation bias becomes longer than a prescribed time, conversely, the loop control amount increases and thereby the ABC system oscillates and deterioration of the waveform occurs.

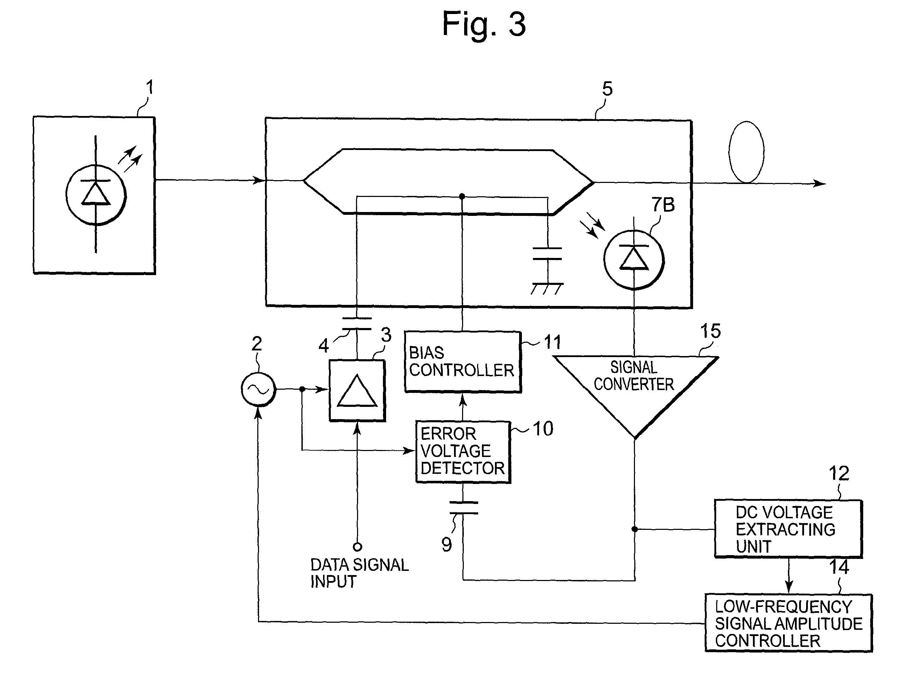

The second embodiment of the present invention will now be described. An optical transmission system according to the second embodiment includes a laser module 1 and an external modulating unit as a configuration similar to the first embodiment mentioned above, as shown in Fig 3. The external modulating unit includes an optical modulator 5 and a control system that controls the optical modulator 5. The control system includes a low-frequency signal oscillator 2, an optical modulator driver 3, a condenser 4, a photodiode 7B, a condenser 9, an error voltage detector 10, a bias controller 11, and a signal converter 15. These components form an automatic bias control (ABC) circuit in the control system. In the second embodiment, the photodiode 7B is built into the optical modulator 5. The photodiode 7B may directly receive light radiated from the output side of the optical modulator 5. Is should be noted that a photodiode may receive branch light output from an optical coupler as the first embodiment. The signal converter 15 converts a current signal (monitor current) output from the photodiode 7B into a voltage signal. The explanation will be omitted about the same components as the first embodiment.

The control system according to the second embodiment further includes a DC voltage extracting unit 12 and a low-frequency signal amplitude controller 14. The DC voltage extracting unit 12 and the low-frequency signal amplitude controller 14 form an ABC stabilizing circuit that stabilizes the ABC circuit. The DC voltage extracting unit 12 extracts the DC component from the voltage signal output from the signal converter 15. The low-frequency signal amplitude controller 14 controls the low-frequency signal oscillator 2 to increase or decrease the amplitude of a low-frequency signal on the basis of the extracted DC voltage.

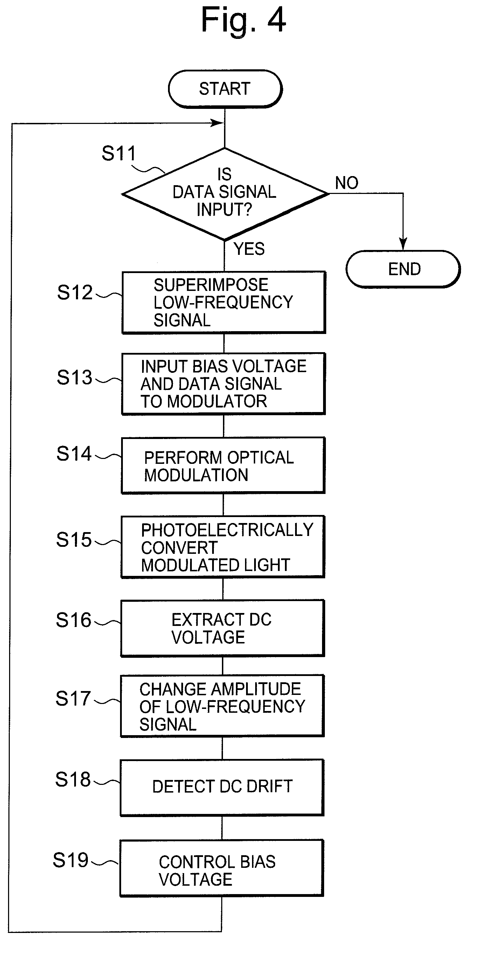

The operation of the second embodiment will now be described. In Fig. 4, first, a data signal is input (step S11). A low-frequency signal coming from the low-frequency signal oscillator 2 is superimposed on the data signal at the optical modulator driver 3 (step S12). A bias voltage, in order to set an operating point of the optical modulator 5, applied by the bias controller 11 and the data signal on which the low-frequency signal is superimposed by the optical modulator driver 3 are input to the optical modulator 5 via the condenser 4 (step S13). CW light emitted from the laser module 1 is intensity- modulated at the optical modulator 5 and output as an optical signal (step S14).

A part of the optical signal output from the optical modulator 5 is received and converted into a current signal (monitor current) with the photodiode 7B, and is further converted into a voltage signal with the signal converter 15 (step S15). A DC voltage is extracted from the converted voltage signal with the DC voltage extracting unit 12 (step S16). Next, the low-frequency signal amplitude controller 14 increases or decreases the amplitude of the low-frequency signal output from the low-frequency signal oscillator 2 on the basis of the extracted DC voltage (step S17). Hence, the amplitude of the low-frequency signal component input to the error voltage detector 10 is controlled to become constant as long as the DC drift amount is constant. The error voltage detector 10, as the first embodiment, detects an error voltage in contrast to a reference voltage and thereby detects a direction and a magnitude of the DC drift in the optical modulator 5 (step S18).

A bias voltage is controlled on the basis of the error voltage at the bias controller 11. (step S19). Hence, the amplitude of the low-frequency signal component input to the error voltage detector 10 is controlled to become constant as long as the DC drift amount is constant. As a result, the operating point of the optical modulator 5 can be controlled optimally. It should be noted that the contents of a series of operation mentioned above may be programmed and processed with a computer.

A benefit of the second embodiment will now be described. With the configuration and the operation mentioned above, the low-frequency signal amplitude controller 14 controls the low-frequency signal oscillator 2 to increase or decrease the amplitude of the low-frequency signal based on the DC voltage extracted by the DC voltage extracting unit 12. Therefore, in the second embodiment, the size of the amplitude of the low-frequency signal component becomes constant as long as the DC drift amount is constant, even in the case where the intensity of the optical signal received by the photodiode 7B varies. As a result, the second embodiment has an effect that a stable automatic bias control (ABC) can be carried out by keeping the feedback amount in the ABC system constant, as the first embodiment.

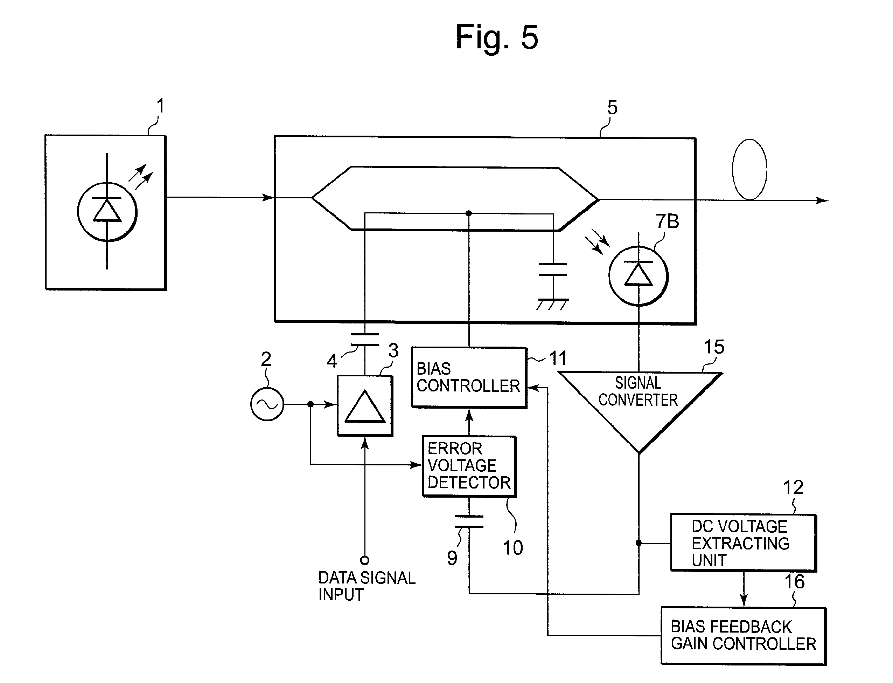

The third embodiment of the present invention will now be described. An optical transmission system according to the third embodiment includes a laser module 1 and an external modulating unit as a configuration similar to the first embodiment mentioned above, as shown in Fig 5. The external modulating unit includes an optical modulator 5 and a control system that controls the optical modulator 5. The control system includes a low-frequency signal oscillator 2, an optical modulator driver 3, a condenser 4, a photodiode 7B, a condenser 9, an error voltage detector 10, a bias controller 11, and a signal converter 15. These components form an automatic bias control (ABC) circuit in the control system. In the third embodiment, the photodiode 7B is built into the optical modulator 5. The photodiode 7B may directly receive light radiated from the output side of the optical modulator 5. Is should be noted that a photodiode may receive branch light output from an optical coupler as the first embodiment.

The control system according to the third embodiment further includes a DC voltage extracting unit 12 and a bias feedback gain controller 16. The DC voltage extracting unit 12 and the bias feedback gain controller 16 form an ABC stabilizing circuit that stabilizes the ABC circuit. The bias feedback gain controller 16 controls the bias controller 11 to set the bias voltage on the basis of the extracted DC voltage. The explanation will be omitted about the same components as the first or second embodiment.

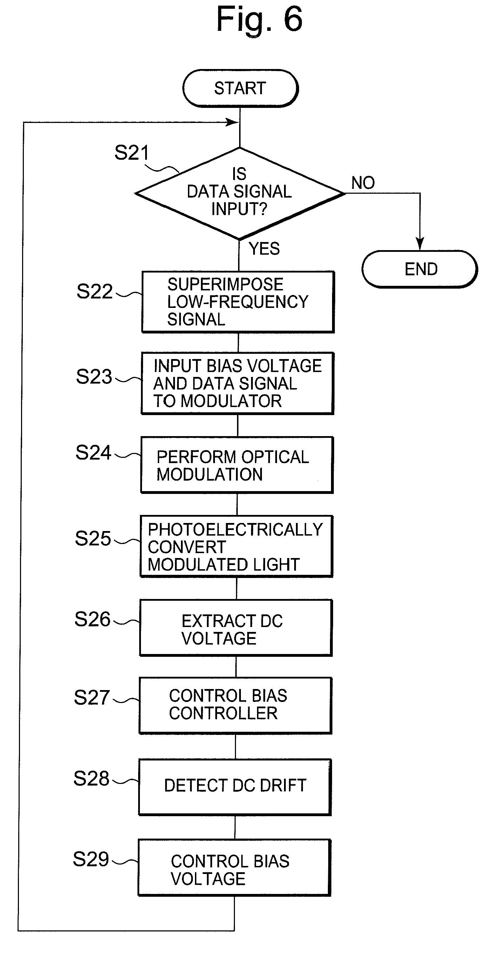

The operation of the third embodiment will now be described. In Fig. 6, first, a data signal is input (step S21). A low-frequency signal coming from the low-frequency signal oscillator 2 is superimposed on the data signal at the optical modulator driver 3 (step S22). A bias voltage, in order to set an operating point of the optical modulator 5, applied by the bias controller 11 and the data signal on which the low-frequency signal is superimposed with the optical modulator driver 3 are input to the optical modulator 5 via the condenser 4 (step S23). CW light emitted from the laser module 1 is intensity- modulated at the optical modulator 5 and output as an optical signal (step S24).

A part of the optical signal output from the optical modulator 5 is received and converted into a current signal (monitor current) with the photodiode 7B, and is further converted into a voltage signal with the signal converter 15 (step S25). A DC voltage is extracted from the converted voltage signal with the DC voltage extracting unit 12 (step S26). Next, the bias feedback gain controller 16 controls a feedback amount of the bias voltage applied from the bias controller 11 to the optical modulator 5 on the basis of the extracted DC voltage (step S27). Hence, the feedback amount of the bias voltage is controlled to become constant as long as the DC drift amount is constant. The error voltage detector 10, as the first embodiment, detects an error voltage in contrast to a reference voltage and thereby detects a direction and a magnitude of the DC drift in the optical modulator 5 (step S28).

A bias voltage is controlled on the basis of the error voltage at the bias controller 11 (step S29). Hence, the feedback amount of the bias voltage applied to the optical modulator 5 is controlled to become constant as long as the DC drift amount is constant. As a result, the operating point of the optical modulator 5 can be controlled optimally.

It should be noted that the contents of a series of operation mentioned above may be programmed and processed with a computer.

A benefit of the third embodiment will now be described. With the configuration and the operation mentioned above, the bias feedback gain controller 16 controls the bias controller 11 to increase or decrease the bias voltage based on the DC voltage extracted by the DC voltage extracting unit 12. Therefore, in the third embodiment, the feedback amount of the bias voltage applied to the optical modulator 5 becomes constant as long as the DC drift amount is constant, even in the case where the intensity of the optical signal received by the photodiode 7B varies. As a result, the third embodiment has an effect that a stable automatic bias control (ABC) can be carried out by keeping the feedback amount in the ABC system constant, as the first embodiment.

It should be noted that the above embodiments may be used in combination.

While the present invention has been described in connection with certain preferred embodiments, it is to be understood that the subject matter encompassed by way of the present invention is not to be limited to those specific embodiments. On the contrary, it is intended for the subject matter of the invention to include all alternatives, modifications and equivalents as can be included within the spirit and scope of the following claims.

Further, the inventor's intent is to retain all equivalents of the claimed invention even if the claims are amended later during prosecution.

## Claims

1. A control system for controlling an optical modulator that intensity-modulates input light, the system comprising:
an automatic bias control circuit configured to control an operating point of an optical modulator due to a bias voltage including:
(i) a low-frequency signal superimposing unit configured to superimpose a low-frequency signal having a frequency lower than the frequency of a data signal on said data signal;
(ii) a photoelectric converter configured to convert an optical signal intensity-modulated with an optical modulator into a voltage signal based on said data signal on which said low-frequency signal is superimposed;
(iii) an error voltage detector configured to detect an error voltage corresponding to said low-frequency signal superimposed on said data signal from said voltage signal; and
(iv) a bias controller configured to control a bias voltage for applying to said optical modulator based on said error voltage; and
an automatic bias control stabilizing circuit configured to stabilize said automatic bias control circuit to control said operating point of said optical modulator based on a direct current voltage extracted from said voltage signal.

2. The control system according to claim 1; wherein:
said photoelectric converter comprises
a light receiving element configured to convert said optical signal intensity-modulated into a current signal, and
a signal converting and amplifying unit configured to convert said current signal into said voltage signal and amplify said voltage signal; and
said automatic bias control stabilizing circuit comprises
a direct current voltage extracting unit configured to extract said direct current voltage contained in said voltage signal, and
a gain controller configured to control the gain of said signal converting and amplifying unit by providing said signal converting and amplifying unit with feedback thereof, in order to keep said direct current voltage constant.

3. The control system according to claim 1 or 2 further comprises
a low-frequency signal oscillator that generates said low-frequency signal and outputs said low-frequency signal to said low-frequency signal superimposing unit.

4. The control system according to claim 3;
wherein said automatic bias control stabilizing circuit comprises
a direct current voltage extracting unit configured to extract said direct current voltage contained in said voltage signal, and
a low-frequency signal amplitude controller configured to control the amplitude of said low-frequency signal by providing said low-frequency signal oscillator with feedback thereof based on said direct current voltage.

5. The control system according to any of the preceding claims;
wherein said automatic bias control stabilizing circuit comprises
a direct current voltage extracting unit configured to extract said direct current voltage contained in said voltage signal, and
a bias feedback gain controller configured to control the output of said bias voltage by providing said bias controller with feedback thereof based on said direct current voltage.

6. The control system according to any of the preceding claims;
wherein photoelectric converter comprises
a light receiving element configured to convert said optical signal intensity-modulated into a current signal, and
a signal converting unit configured to convert said current signal into said voltage signal.

7. The control system according to any of claims 2 to 6;
wherein said light receiving element is external to said optical modulator.

8. The control system according to claim 7;
wherein a part of said optical signal intensity-modulated is divided on the output side of said optical modulator and is received with said light receiving element.

9. The control system according to any of claims 2 to 6;
wherein said light receiving element is built in said optical modulator.

10. The control system according to claim 9;
wherein a part of said optical signal intensity-modulated radiates from the output side of said optical modulator and is received with said light receiving element.

11. The control system according to any of the preceding claims;
said optical modulator is Mach-Zehnder interferometer type.

12. The control system according to any of the preceding claims;
said optical modulator is formed with lithium niobate.

13. An optical modulator for intensity-modulating input light configured to intensity-modulate input light and output an optical signal intensity-modulated by controlling by the control system according to any of the preceding claims.

14. An optical transmitter for transmitting an optical signal comprising:
a light emitting element configured to emit continuous-wave light;
an optical modulator configured to intensity-modulate said continuous-wave light and output an optical signal intensity-modulated; and
the control system configured to control said optical modulator according any of claims 1 to 12.

15. A method of controlling an optical modulator that intensity-modulates input light, the method comprising:
superimposing a low-frequency signal having a frequency lower than the frequency of a data signal on said data signal;
converting an optical signal intensity-modulated with an optical modulator into a voltage signal based on said data signal on which said low-frequency signal is superimposed;
detecting an error voltage corresponding to said low-frequency signal superimposed on said data signal from said voltage signal;
controlling a bias voltage for applying to said optical modulator based on said error voltage;
controlling an operating point of said optical modulator due to said bias voltage;
extracting a direct current voltage contained in said voltage signal; and
stabilizing the control of said operating point of said optical modulator by said bias voltage based on said direct current voltage.

16. The method according to claim 15 further comprising:
converting a part of said optical signal intensity-modulated into a current signal;
converting said current signal into said voltage signal and amplifying said voltage signal;
extracting said direct current voltage contained in said voltage signal; and
controlling the gain of amplification in said voltage signal to keep said direct current voltage constant.

17. The method according to claim 15 or 16 further comprises oscillating and outputting said low-frequency signal.

18. The method according to any of claims 15 to 17 further comprising :
extracting said direct current voltage contained in said voltage signal; and
controlling the amplitude of said low-frequency signal based on said direct current voltage.

19. The method according to any of claims 15 to 18 further comprising :
extracting said direct current voltage contained in said voltage signal; and
controlling the amount of the output of said bias voltage based on said direct current voltage.

20. The method according to any of claims 15 to 19 further comprising :
converting a part of said optical signal intensity-modulated into a current signal; and
converting said current signal into said voltage signal.

21. The method according to any of claims 15 to 20,
wherein a part of said optical signal intensity-modulated radiates from the output side of said optical modulator.

22. The method according to any of claims 15 to 20,
wherein a part of said optical signal intensity-modulated is divided on the output side of said optical modulator.

23. A method of modulating light comprising:
controlling an optical modulator using said method according to any of claims 15 to 22; and
intensity-modulating light input to said optical modulator.

24. A method of transmitting an optical signal comprising:
emitting continuous-wave light;
controlling an optical modulator using the method according to any of claims 15 to 22;
intensity-modulating said continuous-wave light with said optical modulator; and
transmitting an optical signal intensity-modulated.
